# EUROPÄISCHE PATENTANMELDUNG

(11) **EP 1 080 626 A1**
(43) Veröffentlichungstag der Anmeldung: **07.03.2001**
(21) Anmeldenummer: 00109932.4
(22) Anmeldetag: 11.05.2000
(51) Int. Cl.: A01D 69/02, A01D 75/20

(54) **Gartenengerät mit motorisch angetriebenen Werkzeugen**

(30) Priorität: 30.08.1999 DE 19941104
(71) Anmelder: Schnell Modell GmbH, 56349 Kaub/Rhein (DE)
(72) Erfinder: Schnell, Heinz-Wilhelm, 56349 Kaub / Rhein (DE)
(74) Vertreter: Koch, Günther, Dipl.-Ing.

(57) **Zusammenfassung**

Bei einem Gartengerät mit elektromotorisch angetriebenen Werkzeugen ist ein durch Hand zu betätigender Schalter vorgesehen, der willkürlich anschaltbar ist und bei Abschaltung die Werkzeuge stillsetzt, wobei in dem elektrischen Stromkreis ein weiterer Schalter in Reihe zu dem Handschalter angeordnet ist, der als Neigungsschalter ausgebildet ist und beim Überschreiten einer vorbestimmten Winkellage des Gerätes den Stromkreis öffnet und dadurch eine Abschaltung des Elektromotors bewirkt, bevor das Gartengerät eine gefährliche Neigungsstellung annehmen kann.

## Beschreibung

Die Erfindung bezieht sich auf Gartengeräte mit motorisch angetriebenen Werkzeugen, insbesondere auf verfahrbare Gartengeräte wie Rasenmäher, Vertikutierer, Motorhacken oder dergleichen, aber auch auf stationäre Gartengeräte wie Häcksler oder ähnliche Vorrichtungen. Da die im allgemeinen als Messer ausgebildeten Werkzeuge mit erheblichen Drehzahlen umlaufen, sind bei Berührungen erhebliche Verletzungen der Bedienungsperson zu befürchten. Entsprechend den gesetzlichen Bestimmungen müssen derartige Geräte so ausgebildet sein, daß bei einer sachgerechten Benutzung Verletzungen ausgeschlossen sind. Die gesetzlichen Bestimmungen gehen aber noch darüber hinaus, um zu verhindern, daß auch bei nicht sachgerechter Bedienung eine Verletzungsgefahr nach Möglichkeit ausgeschlossen wird. So sind bei Rasenmähern Totmannschalter üblich, die beim Loslassen eine Stillsetzung des Motors gewährleisten. Damit soll verhindert werden, daß bei laufendem Motor das Gartengerät umgekippt wird, um die Funktion der Schneidwerkzeuge zu überprüfen. Da bei schnellaufender Antriebswelle die Bewegungsbahn der Messer oft nicht erkennbar ist, besteht eine erhebliche Gefahr von Verletzungen durch Eingriff in die Bewegungebahn.

Selbst bei Anordnung der gesetzlich vorgeschriebenen Sicherungsvorrichtungen ist die Gefahr von Verletzungen bei unsachgemäßer Handhabung, aber auch bei sachgemäßer Handhabung, nicht völlig auszuschließen. Der Grund dafür liegt darin, daß der Sicherheits-Totmannschalter gedrückt gehalten werden kann, während das Gartengerät umgekippt wird oder wenn das verfahrbare Gerät bei der Bearbeitung eines ungünstigen Geländeabschnitts angehoben und/oder über die Achse eines Radpaares gekippt wird.

Bei stationären Gartengeräten besteht eine erhebliche Verletzungsgefahr dann, wenn das Gerät aus irgendwelchen Gründen bei laufendem Motor umfällt oder umgeworfen wird.

Diese Verletzungsgefahr besteht sowohl für die Bedienungsperson des Gerätes, aber auch für im Umfeld befindliche Personen, und zwar unabhängig davon, ob die Werkzeuge durch einen netzbetriebenen oder durch Akku gespeisten Elektromotor oder eine Verbrennungskraftmaschine angetrieben werden.

Der vorliegenden Erfindung liegt daher die Aufgabe zugrunde, einem erweiterten Sicherheitsbedürfnis Rechnung zu tragen und ein gattungsgemäßes Rasengerät derart auszubilden, daß auch bei unsachgemäßer Handhabung und Überlistung bestehender Sicherheitsschalter die Gefahr einer Verletzung oder Sachbeschädigung weiter vermindert wird.

Gelöst wird die gestellte Aufgabe durch die im Kennzeichnungsteil der Ansprüche 1 bzw. 2 angegebenen Merkmale.

Der gemäß der Erfindung vorgesehene Neigungsschalter bewirkt selbsttätig eine Abschaltung, sobald eine gefährliche Lage des Gerätes erreicht ist. Diese gefährliche Lage kann erreicht werden, wenn das Gerät umgekippt wird oder umfällt, aber auch dann, wenn beispielsweise mittels eines Rasenmähers auf einer übermäßig steilen Hanglage oder Böschung gearbeitet wird. Zweckmäßigerweise ist dabei der Neigungsschalter gemäß Anspruch 3 derart gekapselt und fest im Gerät eingebaut, daß eine manuelle Betätigung ausgeschlossen ist und der Stromkreis eventuell mit einer vorbestimmten Verzögerung erst dann geschlossen werden kann, wenn das gesamte Gerät wieder in eine betriebssichere Lage zurückgeführt ist.

Der Neigungsschalter kann schaltungsmäßig mit einer optischen oder akustischen Signalvorrichtung kombiniert sein, wodurch der Bedienungsperson angezeigt wird, daß infolge einer unzulässigen Neigungsänderung der Sicherheitsschalter angesprochen hat. Zusätzlich kann es zweckmäßig sein, einen Schalter vorzusehen, der geschlossen werden muß, bevor die Werkzeuge in Gang gesetzt werden können, auch wenn das Gartengerät in der richtigen Betriebslage befindlich ist. Damit kann verhindert werden, daß sofort nach Rückkehr in die richtige Betriebslage über den Neigungsschalter ein Einschalten erfolgt.

Ferner ist es zweckmäßig, die Schaltungsanordnung mit einem gewissen Hystereseverhalten derart auszugestalten, daß eine Wiedereinschaltung nicht sofort nach Unterschreiten der vorbestimmten Winkelstellung erfolgt, sondern erst in einer sicheren Betriebslage. Dadurch kann auch ein wiederholtes An- und Abschalten verhindert werden.

Als Neigungsschalter kann ein an sich bekannter, auf Schwerkraft wirkender Pendelschalter, ein Kugelschalter oder auch ein Flüssigkeitsschalter verwendet werden, wie sie beispielsweise bei Heizlüftern oder ähnlichen Geräten üblich sind. Derartige Schalter können so ausgebildet sein, daß sie bei Verschwenkung um alle horizontal liegenden Achsen ansprechen. Es ist jedoch auch möglich und nach der Erfindung vorgesehen, einen Neigungeschalter zu benutzen, der nur in einer Richtung, oder bevorzugt in einer Richtung, anspricht. Hierzu könnte beispielsweise ein Neigungsschalter mit einem kreiselstabilisierten Schaltglied Anwendung finden.

Natürlich muß der jeweils benutzte, auf die Lage des Gerätes ansprechende Schalter entsprechend dem jeweiligen Verwendungszweck derart ausgebildet sein, daß eine unbeabsichtigte Betätigung, beispielsweise durch Vibration der Werkzeuge, verhindert ist. Auch ist es möglich, den Schalter derart auszubilden, daß die Ansprechschwelle veränderbar ist. Diese Einstellung kann beispielsweise durch variable Vorspannung einer Feder erfolgen.

## Patentansprüche

1. Gartengerät mit elektromotorisch angetriebenen Werkzeugen und mit einem elektrischen Stromkreis, in dem ein durch Hand zu betätigender Schalter liegt, der willkürlich anschaltbar ist und bei Abschaltung die Werkzeuge stillsetzt,
dadurch gekennzeichnet, daß in dem elektrischen Stromkreis ein weiterer Schalter in Reihe zu dem Handschalter angeordnet ist und daß der weitere Schalter als Neigungsschalter ausgebildet ist, der bei Überschreiten einer vorbestimmten Winkellage des Gerätes den Stromkreis öffnet und dadurch eine Abschaltung des Elektromotors bewirkt.

2. Gartengerät mit durch eine Brennkraftmaschine angetriebenen Werkzeugen und mit einem elektrischen Zündkreis für die Brennkraftmaschine, der bei Unterbrechung eine Stillsetzung der Werkzeuge bewirkt,
dadurch gekennzeichnet, daß im Zündkreis ein Neigungsschalter angeordnet ist, der bei Überschreiten einer vorbestimmten Winkellage des Gerätes den Zündkreis unterbricht und dadurch die Stillsetzung der Brennkraftmaschine bewirkt.

3. Gartengerät nach den Ansprüchen 1 oder 2,
dadurch gekennzeichnet, daß der Neigungsschalter derart gekapselt und fest im Gerät eingebaut ist, daß eine manuelle Betätigung ausgeschlossen ist.

4. Gartengerät nach den Ansprüchen 1 oder 2,
dadurch gekennnzeichnet, daß der Neigungsschalter zeitverzögert eine Wiedereinschaltung bewirkt.

5. Gartengerüt nach den Ansprüchen 1 oder 2 sowie 4,
dadurch gekennzeichnet, daß der Neigungsschalter mit einer Hysterese behaftet ist.

6. Gartengerät nach den Ansprüchen 1 oder 2,
dadurch gekennzeichnet, daß der Neigungsschalter mit einem weiteren manuell einstellbaren Schaltglied kombiniert ist.

7. Gartengerät nach den Ansprüchen 1 oder 2,
dadurch gekennzeichnet, daß der Neigungsschalter mit einer optischen oder akustischen Signalvorrichtung derart gekuppelt ist, daß bei Abschaltung eine Signalgabe erfolgt.

8. Gartengerät nach den Ansprüchen 1 oder 2,
dadurch gekennzeichnet, daß die Ansprechschwelle des Neigungsschalters einstellbar ist.
